# EUROPEAN PATENT SPECIFICATION

(11) **EP 3 993 984 B1**
(45) Date of publication and mention of the grant of the patent: **20.11.2024**
(21) Application number: 19739219.4
(22) Date of filing: 02.07.2019
(51) Int. Cl.: B29C 64/10, G06Q 10/20, B33Y 99/00, B29C 64/106, B22F 10/85, B22F 10/366, B29C 64/393, B33Y 10/00, B33Y 30/00, B33Y 50/02, G06Q 50/40

(54) **A METHOD FOR CONTROLLING MOBILE 3-D PRINTING ON A VEHICLE AND A VEHICLE COMPRISING A 3D PRINTER SYSTEM**
VERFAHREN ZUR STEUERUNG VON MOBILEM 3D-DRUCKEN AUF EINEM FAHRZEUG UND FAHRZEUG MIT EINEM 3-D-DRUCKSYSTEM
MÉTHODE DE CONTRÔLE D'IMPRESSION 3-D MOBILE SUR UN VÉHICULE ET VÉHICULE COMPRENANT UN SYSTÈME D'IMPRESSION 3D

(43) Date of publication of application: 11.05.2022
(73) Proprietor: VOLVO TRUCK CORPORATION, 405 08 Göteborg (SE)
(72) Inventor: NILSSON, Anders, 421 66 VÄSTRA FRÖLUNDA (SE); JOHANSSON, Christian, 431 36 MÖLNDAL (SE); KARLSSON, Emil, 413 01 GÖTEBORG (SE)
(74) Representative: Kransell & Wennborg KB
(86) International application number: PCT/EP2019/067686
(87) International publication number: WO 2021/001021

(56) References cited:
- EP-A1- 3 476 598
- CN-A- 105 383 056
- CN-A- 108 748 990
- KR-A- 20180 064 332
- US-A1- 2016 116 904

## Description

### TECHNICAL FIELD

The invention relates to a method for controlling an operation of a three-dimensional (3-D) printer comprised with a vehicle.

Although the invention will be described in relation to a truck, the invention is not restricted to this particular vehicle, but may also be used in other types of vehicles such as buses, construction equipment, cars, industrial construction machines, working machines, wheel loaders, etc. Furthermore, the invention may not be restricted to vehicles, but may also be used in various types of movable machines.

### BACKGROUND

Vehicles, in particular heavy vehicles and working machines are frequently operated with large and heavy loads under rough conditions. While such vehicles are typically designed to withstand heavy and long-lasting external loads, all types of vehicles eventually break down at some point and that may often occur at the road or at a working site. In such occasions, it may sometimes be possible to receive support from various types of roadside services in order to ensure that the operators of the vehicles still can meet delivery schedules with less down time. As such, the vehicles can undergo service without the hassle of moving them for maintenance or even be repaired on the road or at the working site.

However, while e.g. service trucks may provide support with regards to tire replacements, out of fuel situations and minor repairs, such service trucks cannot always provide adequate support, in particular as vehicles and machines comprise several different specific components. Thus, when there is a breakdown of a vehicle or machine and the brake down is caused by a damaged component part, such part may need to be replaced. Typically, the vehicle- or machine-owner is then recommended to order a replacement part from the manufacturer of the vehicle or machine or from a service organization. When the correct part has been identified at the manufacturer or service organization, it is transported from a distribution channel in the relevant region. If the part is needed to solve an urgent break down, the quickest possible supply chains may be used to ensure that the part is received at the location as soon as possible.

However, there is an increasing demand on reducing service and maintenance time of working machines and heavy vehicles as extensive lead times for receiving high-quality replacements parts or performing services on the machines and vehicle generally cause performance disruption for the users of the machines and vehicles. Still, if failed components of a vehicle are not replaced with new parts, the vehicle may be more severely damaged, thus leading to a longer performance disruption.

In this field, US 2016/0116904 A1 discloses a mobile three-dimensional (3-D) service part printing for printing parts, while the transport travels along a route to a customer. By way of example, the method may comprise determining an optimal print rate for the 3-D printer based on a distance between the customer site and the transport, the route or the terrain.

According to its Abstract, CN 105 383 056 A discloses a three-dimensional printing device comprising a vehicle body, a power device, a walking device, a printing support, a printing head and a printing stabilization system.

According to its Abstract, KR 2018 0064332 A discloses another example of a three-dimensional printer comprising moulding plates disposed on different sides of a frame; a nozzle unit for spraying a moulding material; and a transfer unit for moving the nozzle unit to form a moulding. The nozzle unit may be supported on the transfer unit or may be displaced by a driving unit such that an injection direction is one of the moulding plates. The injection direction of the nozzle unit can be changed corresponding to the selected moulding plate, so that sculptures of various scales can be produced by one device.

Despite the activity in the field, there remains a need to further improve the methods for delivering replacement parts to machines and vehicles.

### SUMMARY

An object of the invention is to provide an improved method for controlling three-dimensional (3-D) printing on a moving machine or vehicle. The object is at least partly achieved by a method according to claim 1. The object is also at least partly achieved by the other independent claims. Claim 1 defines the method according to the invention, claim 14 defines the computer program according to the invention, claim 15 defines the computer readable medium according to the invention and and claim 16 defines the apparatus according to the invention.

According to a first aspect of the invention, there is provided a method for controlling an operation of a three-dimensional (3-D) printer comprised with a vehicle, wherein the method comprises the steps of: receiving an indication of any one of the current force and the expected force affecting the operation of the 3-D printer; comparing any one of the current force and the expected force affecting the operation of the 3-D printer with a given force threshold; and adjusting a printing rate of the 3-D printer based on any one of the current force and the expected force affecting the operation of the 3-D printer, wherein, if any one of the current force and the expected force affecting the operation of the 3D-printer is above the force threshold, the method further comprises the step of adjusting the printing rate of the 3-D printer to a reduced printing rate.

In this manner, the method according to the example embodiments allows for printing 3-D parts on a moving machine or vehicle in reliable, yet efficient, manner. In particular, by determining current forces or estimating expected forces that may cause an impact on the 3-D printing process, it becomes possible to take such factors into consideration before they cause damage on the 3-D printing process. As such, the method according to the example embodiments provides for at least maintaining a high level of quality and reducing the risk of errors on parts being 3-D printed on the machine or vehicle when travelling to a customer or an end user of the parts. By way of example, the expected force affecting the operation of the 3-D printer may be any one of an upcoming vehicle vibration event, an upcoming vehicle event generating a detrimental force for the vehicle, an expected force caused by a change in direction of the vehicle, an expected force caused by a change in velocity of the vehicle etc. Analogously, by way of example, the current force affecting the operation of the 3-D printer may be any one of a current vehicle vibration event, a current vehicle event generating a detrimental force for the vehicle, a force caused by a change in direction of the vehicle, a force caused by a change in velocity of the vehicle etc.

The invention is at least partly based on the insight that 3-D printed parts may be produced by a number of different technologies and from a number of different materials, each technology and each material requiring different operational conditions to allow for producing parts in reliable manner. Further, since it has become possible to use 3-D printing for producing urgently needed parts, such as replacement parts or spare parts for vehicles, it has also been possible to produce such parts on route to the end user. However, printing parts by means of a 3-D printed installed in e.g. a trailer of a trolling truck poses a different challenge on the printing process compared to printing at a manufacturing plant as the trailer is subjected to various external forces and changes when travelling on uneven roads, over pot holes, during emergency braking or other driving manoeuvres. By the example embodiments of the invention, it becomes possible to provide a method for printing 3-D parts in a moving equipment on route to the end user without damaging the 3-D printer or causing errors on the 3-D printed part. In particular, it becomes possible to produce and deliver temporary 3-D printed replacement part intended to be used temporarily to support uptime until a more permanent part can be delivered in the form of a conventional spare part or an original component. The temporary 3-D printed replacement part serves the purpose of providing a provisional means for the end user to ensure a continued operation. That is, temporary 3-D printed replacement parts are typically used for urgently needed parts that cannot be supplied quick enough with the traditional supply chain. In the context of the example embodiments, the term "temporary 3-D printed replacement part" refers to an interchangeable part obtained by a 3-D printer. Due to the manufacturing and the materials of the 3-D printed replacement part, the part typically has an associated characteristic, i.e. an inherent characteristic, that is different to a corresponding characteristic of an ordinary corresponding part or a corresponding standard replacement part for the ordinary part. That is, the characteristic of the 3-D printed replacement part is often, although not always, of a different quality than the corresponding characteristic of the ordinary corresponding part or the corresponding standard replacement part for the ordinary part. At least for this reason, the 3-D printed replacement part is only intended for being used for a defined period of time.

Further, it should be noted that the printing rate of the 3-D printer can be adjusted both in a reactive manner, i.e. by determining the current force, and in a proactive manner, i.e. by determining the expected force affecting the operation of the 3-D printer. According to one example embodiment, the printing rate of the 3-D printer is only based on a determined current force affecting the operation of the 3-D printer. In another example embodiment, the printing rate of the 3-D printer is only based on a determined expected force affecting the operation of the 3-D printer.

Adjusting a printing rate of the 3-D printer based on the received indication of any one of the current force and the expected force affecting the operation of the 3-D printer is typically performed when the external force is estimated as being critical for the operation of the 3-D printer or the characteristic of the 3-D printed part. Thus, by way of example, if any one of the current force and the expected force affecting the operation of the 3D-printer is above the force threshold, the method further comprises the step of adjusting the printing rate of the 3-D printer to a reduced printing rate. Hence, according to one example embodiment, the step of comparing any one of the current force and the expected force acting on the 3-D printer with a given force threshold further comprises determining if any one of the current force and the expected force affecting the operation of the 3D-printer is above the force threshold.

In some example embodiments, the step of adjusting a printing rate of the 3-D printer based on any one of the current force and the expected force affecting the operation of the 3-D printer may also comprise determining an estimated reduction of the printing rate of the 3-D printer.

In addition, or alternatively, if any one of the current force and the expected force affecting the operation of the 3D-printer is below the force threshold, the method may further comprise the step of adjusting the printing rate of the 3-D printer to an increased printing rate.

According to one example embodiment, the reduced printing rate corresponds to interrupting the operation of the 3-D printer. In this manner, the operation of the 3-D printer can be paused if the current force or the expected force is determined as being detrimental for the part to be 3-D printed.

According to one example embodiment, the force threshold comprises a threshold lower-level and a threshold upper-level. Further, in this example embodiment, the step of adjusting the printing rate of the 3-D printer based on any one of the current force and the expected force affecting the operation of the 3-D printer comprises adjusting the printing rate of the 3-D printer to a first reduced printing rate if any one of the current force and the expected force affecting the operation of the 3-D printer exceeds the threshold lower-level, while interrupting the operation of the 3-D printer if any one of the current force and the expected force affecting the operation of the 3-D printer exceeds the threshold upper-level. Typically, the force level of the threshold upper-level is higher than the force level of the threshold lower-level.

Thus, the term "force threshold", as used herein, may contain several different types of thresholds and also several different types of parameters. According to one example embodiment, the force threshold is associated with a quality level of the 3-D printer. In this manner, the printing rate can be adjusted based on a desired quality level of the 3-D printing. Thus, the method may further comprise the step of determining a desired quality level of the 3-D printing process, and adjusting the force threshold based on the determined desired quality level of the 3-D printing process.

By way of example, the desired quality level of the 3-D printing process is selected by a user or from a 3-D printer manufacturing instruction.

According to one example embodiment, the method further comprises the steps of determining a quality impact on the operation of the 3-D printer based on the indication of any one of the current force and the expected force affecting the operation of the 3-D printer and adjusting the printing rate of 3-D printer based on the determined quality impact of the 3-D print.

In addition, or alternatively, the method may further comprise the step of adjusting any one of the thresholds values based on the determined quality impact on the 3-D printed part.

The given force threshold may also typically be defined based on the type of 3-D printer, type of machine, type of vehicle, type of route etc. Hence, the force threshold may in some example embodiments also be set based on an associated characteristic of the 3-D printer, the material and structure of the part to be printed, derivable from the manufacturer of the 3-D printer, derivable from the type of 3-D printed part to be printed, determined based on the type of machine/vehicle, determined based on the type of installation of the 3-D printed replacement part in the machine/vehicle or any combination thereof. The given force threshold is subsequently stored in a control unit. The force threshold may typically be a predetermined value stored in the control unit. In addition, or alternatively, the threshold value may be a dynamic value updated during use of the machine or vehicle.

While forces affecting the operation of the 3-D printer may be generated from various different sources during use of the machine or vehicle, the indication of any one of the current force and the expected force affecting the operation of the 3-D printer typically relates to any one of a vibration event, a change in direction of the vehicle and a change in velocity of the vehicle. In this context, a vibration event, a change in direction of the vehicle and a change in velocity of the vehicle may be considered as a force generating event.

The current force or the expected force can be detected in several different manners.

Typically, the indication of any one of the current force and the expected force is determined by a sensor device configured to detect a force generating event within a detection capacity of the force detecting device. In particular, the actual force or the force generating event may be identified by the sensor device. Thus, the sensor device may be arranged to detect any one of a current force and an expected force affecting the operation of the 3-D printer. By way of example, the sensor device comprises any one of a gyroscope, lidar, radar, a vibrations sensor, chassis suspension sensor, cab suspension sensor, traction sensor, anti-lock brake sensor. By way of example, a radar or lidar can be used as a proactive means for detecting obstacles in the route ahead of the machine or vehicle that may affect the operation (e.g. a change in speed or a change in direction) of the machine or vehicle, and thus causing a force affecting the operation of the 3-D printer.

Typically, the vehicle comprises a sensor arranged to gather data indicating the current force affecting the operation of the 3-D printer or data indicating the expected force that may affect the operation of the 3-D printer. Typically, although not strictly required, receiving an indication of the current force or the expected force affecting the operation of the 3-D printer is performed by a sensor configured to monitor various forces affecting the vehicle and the 3-D printer. Thus, the sensor is configured to receive information indicative of the current force or the expected force at a given point in time. It should be readily appreciated that the step of monitoring the current force or the expected force is typically performed over time.

Typically, the indication of the expected force is determined by any one of a road map data, gps, typographical data and Real Time Traffic Information (RTTI). Such means may thus also be used to identify upcoming forces affecting the operation of the 3-D printer in a proactive manner. Upcoming forces can be generated from e.g. steep hills, road construction.

The sensor is arranged in communication with the control unit of the machine or vehicle, thereby allowing for transfer of data indicative of the force affecting the operation of the 3-D printer to the control unit. The sensor may be arranged on several different locations such as on the vehicle, in the vehicle and/or remote from the vehicle and in communication with the control unit.

In other words, according to one example embodiment, the sensor device is a proactive sensor configured to detect an indication of the expected force. In some example embodiments, the sensor device is a reactive sensor configured to detect an indication of the current force. In other example embodiments, the sensor device is a combination of a proactive sensor and a reactive sensor.

According to one example embodiment, the method further comprises the steps of determining a duration of any one of the current force and the expected force affecting the operation of the 3-D printer and adjusting the printing rate of the 3-D printer based on the determined duration of any one of the current force and the expected force affecting the operation of the 3-D printer. In this manner, the printing rate can be adjusted in a more advanced manner and for a longer period of time. By way of example, the step of adjusting the printing rate of the 3-D printer may only be activated if the determined duration of any one of the current force and the expected force affecting the operation of the 3-D printer exceeds a given time period.

According to one example embodiment, the steps of the method are performed in sequence. However, at least some of the steps of the method can be performed concurrently. The method according to the example embodiments can be executed in several different manners. Generally, the steps of the method according to the example embodiments may be performed by a control unit. According to one example embodiment, the steps of the method are performed by a control unit during use of the machine or vehicle. The method may be continuously running as long as the machine or vehicle is operative, but also continuously running when the machine or vehicle is in a non-operative state, e.g. during a charging operation (if the machine or vehicle comprises an electric propulsion system). The sequences of the method may likewise be performed by other types of components and by other technologies as long as the method can provide the associated functions and effects.

The term "control unit", as used herein, is typically, although strictly not necessary, an electronic control unit. The control unit may include a microprocessor, microcontroller, programmable digital signal processor or another programmable device. Thus, the control unit comprises electronic circuits and connections as well as processing circuitry such that the control unit can communicate with the machine, or vehicle, and with different parts of the machine, or vehicle, such as the 3-D printer, the sensors and any other parts in need of being operated in order to provide the functions of the example embodiments. The control unit may comprise modules in either hardware or software, or partially in hardware or software and communicate using known transmission buses such as CAN-bus and/or wireless communication capabilities. The processing circuitry may be a general purpose processor or a specific processor. The control unit typically comprises a non-transistory memory for storing computer program code and data upon. Thus, the control unit may be embodied by many different constructions.

In other words, the control functionality of the example embodiments of the method may be implemented using existing computer processors, or by a special purpose computer processor for an appropriate system, incorporated for this or another purpose, or by a hardwire system. Embodiments within the scope of the present disclosure include program products comprising machine-readable medium for carrying or having machine-executable instructions or data structures stored thereon. Such machine-readable media can be any available media that can be accessed by a general purpose or special purpose computer or other machine with a processor. By way of example, such machine-readable media can comprise RAM, ROM, EPROM, EEPROM, CD-ROM or other optical disk storage, magnetic disk storage or other magnetic storage devices, or any other medium which can be used to carry or store desired program code in the form of machine-executable instructions or data structures and which can be accessed by a general purpose or special purpose computer or other machine with a processor. When information is transferred or provided over a network or another communications connection (either hardwired, wireless, or a combination of hardwired or wireless) to a machine, the machine properly views the connection as a machine-readable medium. Thus, any such connection is properly termed a machine-readable medium. Combinations of the above are also included within the scope of machine-readable media. Machine-executable instructions include, for example, instructions and data which cause a general purpose computer, special purpose computer, or special purpose processing machines to perform a certain function or group of functions. While the example embodiments of the method described above includes a control unit being an integral part of the machine or vehicle, it is also possible that the control unit may be a separate part of the vehicle, and/or arranged remote from the vehicle and in communication with the vehicle. The control unit may also include a transceiver arranged to receive Real Time Traffic Information (RTTI).

According to one example embodiment, the control unit is an electronic control unit comprised on-board the vehicle or machine. According to one example embodiment, the control unit is a cloud server arranged in networked communication with the vehicle or machine. According to one example embodiment, the control unit is implemented using a cloud server being network connected to an electronic control unit (ECU) comprised with the vehicle or machine.

According to a second aspect of the present invention, there is provided a computer program comprising program code means for performing the steps of any one of the example embodiments of the first aspect when the program is run on a computer. Effects and features of the second aspect of the invention are largely analogous to those described above in connection with the first aspect.

According to a third aspect of the present invention, there is provided a computer readable medium carrying a computer program comprising program code means for performing the steps of any of the embodiments of the first aspect when the program product is run on a computer. Effects and features of the third aspect of the invention are largely analogous to those described above in connection with the other aspects.

According to a fourth aspect of the present invention, there is provided a three-dimensional (3-D) printer system for a vehicle, comprising a 3-D printer, a control unit arranged in communication with the 3-D printer, and a sensor device configured to detect an indication of any one of a current force and an expected force affecting the operation of the 3-D printer. Moreover, the control unit is arranged to receive, from the sensor device, the indication of any one of the current force and the expected force affecting the operation of the 3-D printer; compare any one of the current force and the expected force affecting the operation of the 3-D printer with a given force threshold; and adjust the printing rate of the 3-D printer based on any one of the current force and the expected force affecting the operation of the 3-D printer, wherein, if any one of the current force and the expected force affecting the operation of the 3D-printer is above the given force threshold, the control unit is arranged to adjust the printing rate of the 3-D printer to a reduced printing rate.

Typically, the control unit is also configured to perform any one of the steps of any one of the example embodiments as described above in connection with the first aspect. Effects and features of the fourth aspect of the invention are largely analogous to those described above in connection with the other aspects.

The 3-D printer is typically a standard 3-D printer used for printing 3-D objects. While the 3-D printer may be a standard commercially available 3-D printer, it should generally be designed and dimensioned for an interior space of a machine or vehicle, such as a trailer of a semi-truck. Further, the 3-D printer should typically be configured to be attached to a frame, such as surface of the trailer.

According to a fifth aspect of the present invention, there is provided a vehicle comprising a three-dimensional (3-D) printer system according to any one of the example embodiments mentioned above in connection with the fourth aspect, as well as in connection with any one of the other aspects. Effects and features of the sixth aspect of the invention are largely analogous to those described above in connection with the other aspects. According to one example, the vehicle is a truck. By way of example, the vehicle is a semi-truck vehicle comprising a trailer, wherein the 3-D printer is arranged in the trailer to print parts on route to a user.

Further features of, and advantages with, the present invention will become apparent when studying the appended claims and the following description.

### BRIEF DESCRIPTION OF THE DRAWINGS

The above, as well as additional objects, features and advantages of the present invention, will be better understood through the following illustrative and non-limiting detailed description of exemplary embodiments of the present invention, wherein:
Fig. 1 is a side view of a vehicle in the form of a truck, in which a three-dimensional (3-D) printer system may be incorporated and operated to perform a method according to the present invention;
Fig. 2 is a flow-chart of a method according to an example embodiment of the invention, in which the method comprises a number of steps for controlling an operation of the 3-D printer comprised with the vehicle in Fig. 1;
Fig. 3 is a flow-chart of additional steps of the method in Fig. 2 according to an example embodiment of the invention, in which the method comprises a number of steps for controlling an operation of the 3-D printer comprised with the vehicle in Fig. 1;
Fig. 4 is a diagram illustrating an example of a force affecting the vehicle in Fig. 1 when travelling a distance on route to a user, in which the force corresponds to a detected vibration affecting the operation of the 3-D printer installed in the vehicle.

With reference to the appended drawings, below follows a more detailed description of embodiments of the invention cited as examples.

### DETAILED DESCRIPTION OF EXAMPLE EMBODIMENTS OF THE INVENTION

The present invention will now be described more fully hereinafter with reference to the accompanying drawings, in which exemplary embodiments of the invention are shown. The invention may, however, be embodied in many different forms and should not be construed as limited to the embodiments set forth herein; rather, these embodiments are provided for thoroughness and completeness. The skilled person will recognize that many changes and modifications may be made within the scope of the appended claims.

Like reference character refer to like elements throughout the description.

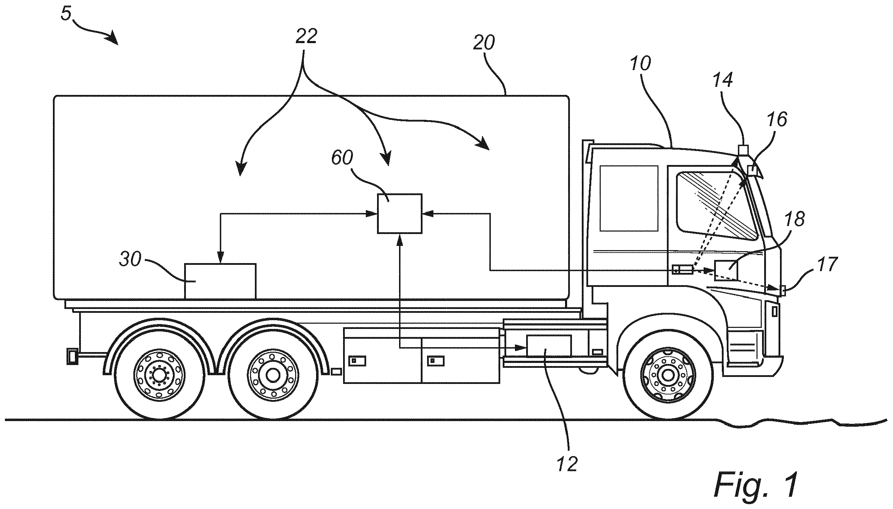

Referring now to the drawings and to Fig. 1 in particular, there is depicted an exemplary vehicle, here illustrated as a truck 5. The truck typically comprises a propulsion system configured to provide traction power to one or more ground engaging members, e.g. one or more wheels. In this example, the truck comprises an internal combustion engine 12 arranged to provide traction power to the wheels. The engine 12 is only schematically illustrated in Fig. 1. Optional, the propulsions system comprises a transmission (not shown) for transmitting a rotational movement from the engine to a propulsion shaft, sometimes denoted as the driven shaft (not shown). The propulsion shaft connects the transmission to the pair of wheels. Further, the truck in Fig. 1 is a semi-trailer truck comprising a tractor unit 10 and trailer 20 connected to the truck unit.

In the vehicle illustrated in Fig. 1, there is also installed a three-dimensional (3-D) printer system 22. The 3-D printer system comprises a 3-D printer 30 for printing parts to an end user or a customer. The 3-D printer 30 is fixedly attached to an inner surface of the trailer, as shown in Fig. 1. While the 3-D printer 30 may be arranged to produce a number of different component parts to the end user or the customer, the 3-D printer is here arranged to produce so called temporary replacement parts to a machine-owner or a vehicle-owner. A replacement part in the form of a temporary 3-D printed replacement part typically refers to a component part that has an inherent (associated) characteristic that is different to a corresponding characteristic of an ordinary corresponding part or a corresponding standard replacement part for the ordinary part. Further, the characteristic of the 3-D printed replacement part may be of a different quality than a corresponding characteristic of the ordinary corresponding part. At least for this reason, the 3-D printed replacement part is typically intended for being used in the machine or vehicle for a defined period of time. As such, the 3-D printed replacement part is generally a temporary replacement part. The 3-D printer 30 is here a commercially available standard 3-D printer dimensioned for the space of the trailer 20.

The 3-D printer 30 arranged in the vehicle is typically a printer configured for additive manufacturing. The process "additive manufacturing", sometimes also called free-form fabrication, is a method for forming three-dimensional articles through successive fusion of chosen parts of powder layers applied to a worktable. There are several different types of additive manufacturing apparatus. One type of additive manufacturing technology is Powder Bed Fusion (PBF), which produces a solid part using a thermal source that induces fusion (sintering or melting) between the particles of a metal powder one layer at a time. One example of a PDF technology is Electron Beam Melting (EBM), which is an additive manufacturing where an electron emitting cathode in an electron acceleration column is the source for electron beam generation, which in turn is acting as an energy beam for melting the power material. By way of example, the 3-D printed part is obtained by an additive manufacturing process using a metallic powder material.

Further, the 3-D printer system comprises a control unit 60 arranged in communication with the 3-D printer 30. In this example, the control unit is an electronic control unit comprised on-board the vehicle. The vehicle also includes a number of sensor devices such as a force detecting unit for detecting current forces, up-coming forces and/or force-generating events affecting the vehicle and the operation of the 3-D printer. While it may be enough that the 3-D printer system comprises one single sensor device, the vehicle as illustrated in Fig. 1 comprises a plurality of sensor devices/force detecting units, including a Lidar 14, an ultrasonic sensor 16, a vibration sensor 18 and a Radar 17. Each one of these sensor devices/force detecting units are arranged in communication with the control unit 60. In one example, although not shown, the control unit further comprises a transceiver arranged to receive Real Time Traffic Information (RTTI). Further, each one of these sensor devices and/or force detecting devices is arranged to detect any one of a current force affecting the operation of the 3-D printer and an expected force affecting the operation of the 3-D printer. As the control unit is arranged in communication with the 3-D printer, the vehicle and the sensors arranged to monitor and detect external environmental forces, it becomes possible to transfer information indicative of detected external forces affecting the vehicle to the control unit for further processing so as to determine if such forces may affect the operation of the 3-D printer.

Moreover, the control unit 60 is arranged to receive an indication of the current force affecting the vehicle and the operation of the 3-D printer and to compare the current force affecting the operation of the 3-D printer with a given force threshold.

Also, the control unit 60 is arranged to adjust the printing rate of the 3-D printer based on the current force affecting the operation of the 3-D printer.

Alternatively, or in addition, the control unit 60 is arranged to receive an indication of the expected force affecting the vehicle and the operation of the 3-D printer and to compare the expected force affecting the operation of the 3-D printer with a given force threshold. Also, the control unit is arranged to adjust the printing rate of the 3-D printer based on the expected force affecting the operation of the 3-D printer.

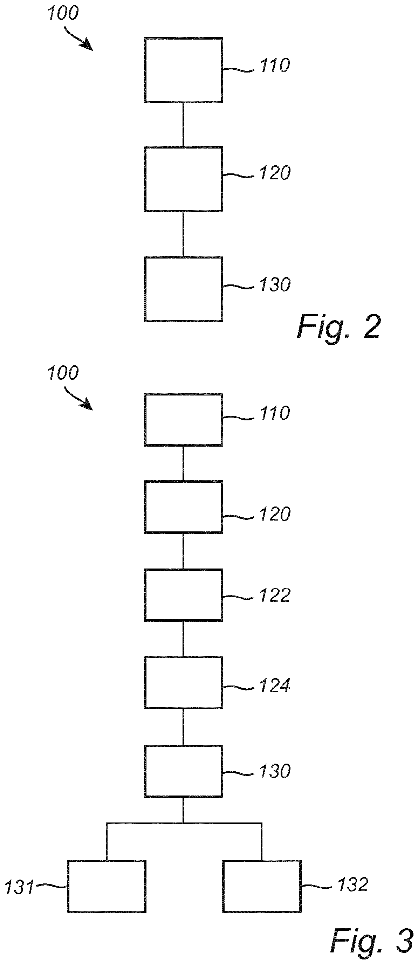

Turning now to Fig. 2, there is depicted a flowchart of a method according to example embodiments of the invention. The method 100 is intended for controlling an operation of a three-dimensional (3-D) printer comprised with the vehicle, e.g. the 3-D printer 30 as described in relation to Fig. 1. In this example embodiment, the control unit receives 110 an indication of a current force or an expected force affecting the operation of the 3-D printer. By way of example, the expected force affecting the operation of the 3-D printer may be an upcoming vehicle vibration event potentially causing a detrimental force for the 3-D printer itself or for the 3-D printing process. Such detrimental force may be generated from a number of different sources, such as from a sudden change in direction of the vehicle, an emergency braking event, a general vibration event affecting the vehicle (and the 3-D printer), a change in acceleration of the vehicle, a change in speed of the vehicle etc. As mentioned in relation to the vehicle printing system as described in relation to Fig. 1, there is a number of different types of sensors and devices to accurately detect and determine the magnitude of the current force. In addition, or alternatively, the sensors and devices may be arranged to estimate any possible expected forces affecting the operation of the 3-D printer along the route to the customer or end user. Depending on the type of sensor and type of control unit, data relating to the current force and expected force may either be sent to the control unit for further processing or be further evaluated by the sensor/device itself. However, in this example, any one of the sensors 14, 16, 17 and 18 detects the vibration or current force and transfer associated data to the control unit for further processing. As such, the control unit is typically arranged to determine the level of exposure of the upcoming vibrations and forces on the 3-D printed.

Typically, the control unit contains pre-stored data relating to critical levels of the forces, including, but not limited to thresholds for determining whether the forces are critical for any one of the vehicle, the 3-D printed and the 3-D printing process. Such data relating to the critical forces may also be updated on a regularly basis and may depend on the type of use of the vehicle, type of vehicle, type of 3-D printer etc.

In other words, as illustrated in Fig. 2, the control unit further compares 120 the current force or expected force affecting the operation of the 3-D printer with a given force threshold. If the current force or expected force affecting the operation of the 3D-printer is above the force threshold, the control unit adjusts 130 the printing rate of the 3-D printer to a reduced printing rate. In this example, the reduced printing rate corresponds to interrupting the operation of the 3-D printer. However, in other examples, it may be sufficient to merely reduce the printing rate to a lower printing rate than the current printing rate.

While the threshold may take several aspects into consideration, the force threshold is typically at least associated with a desirable quality level of the 3-D printed replacement part.

It should be noted that the control unit is generally arranged to take both any current force and any expected force into consideration when adjusting the printing rate of the 3-D printer to an appropriate printing rate. However, it may also be conceivable that the control unit is arranged to only take one of the current force and the expected force into consideration when adjusting the printing rate of the 3-D printer to an appropriate printing rate.

Another example embodiment of a method according to the present invention is depicted in Fig. 3. Thus, turning now to Fig. 3, which is a flow chart of an extended version of the example embodiment described in Fig. 2, the method comprises one or more additional steps for further controlling the operation of the 3-D printer. The control unit is here further arranged to determine 122 a desired quality level of the 3-D printing process. Thus, the control unit is also arranged to adjust the force threshold based on the determined desired quality level of the 3-D printing process. By way of example, the desired quality level of the 3-D printing process is selected by a user and/or directly from a 3-D printer manufacturing instruction.

Optionally, although strictly not required, the control unit may also determine a quality impact on the operation of the 3-D printer based on the indication of the current force or expected force affecting the operation of the 3-D printer and adjust the printing rate of 3-D printer based on the determined quality impact of the 3-D print.

Still further, the control unit is here arranged to determine an impact on the operation of the 3-D printer based on the indication of current force or expected force acting on the 3-D printer. Moreover, the control unit typically adjust any one of the thresholds values based on the determined impact on the 3-D print results.

In addition, in this example embodiment, the control unit determines 124 a duration of the current force or expected force affecting the operation of the 3-D printer. Subsequently, the control unit is arranged to adjust the printing rate of the 3-D printer based on the determined duration of the current force or expected force affecting the operation of the 3-D printer.

In one example embodiment, the step of adjusting the printing rate of the 3-D printer is only activated if the determined duration of the current force, or expected force, affecting the operation of the 3-D printer exceeds a given time period.

Further, the step of adjusting 130 the printing rate of the 3-D printer based on the current force or expected force affecting the operation of the 3-D printer can be performed in several different manners. In this example, if the current vibration event, or the upcoming vibration event, is above a predetermined first vibration threshold, the control unit is further arranged to determine an estimated reduction of the printing rate of the 3-D printer based on the current vibration event (or the upcoming vibration) to ensure an adequate 3-D printed replacement part. Moreover, if the current vibration event, or the upcoming vibration event, is above a predetermined second vibration threshold, the control unit is also arranged to interrupt the operation of the 3-D printer to avoid that the quality of the 3-D printed replacement part becomes critical low compared to a lower threshold.

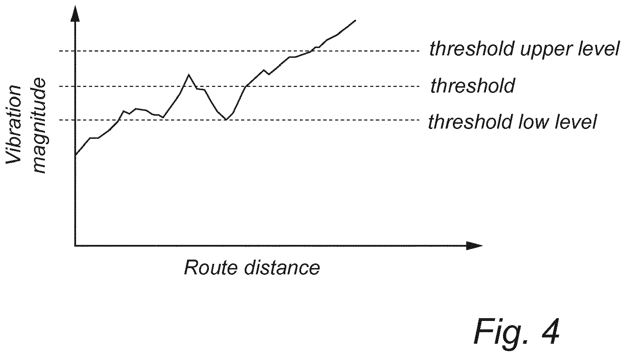

This optional estimation of the magnitude of the vibration is illustrated in Fig. 4, which schematically illustrates how vibrations may change in magnitude along a road, i.e. change in vibration magnitude in relation to the vehicle's route to the end user or customer. In this example, the force threshold is associated with a quality level of the 3-D printer. Further, the force threshold comprises a threshold lower-level and a threshold upper-level. The force level of the threshold upper-level is higher than the force level of the threshold lower-level. Accordingly, the control unit is arranged to adjust 130 the printing rate of the 3-D printer based on the current force, or expected force, affecting the operation of the 3-D printer by adjusting the printing rate of the 3-D printer to a first reduced printing rate 131 if the current force, or expected force, affecting the operation of the 3-D printer exceeds the threshold lower-level, while interrupting 132 the 3-D printer if the current force, or expected force, affecting the operation of the 3-D printer exceeds the threshold upper-level.

As mentioned above, it is to be noted that the steps of the method are typically performed by the control unit 60 during use of the vehicle. Thus, the control unit is configured to perform any one of the steps of any one of the example embodiments as described above in relation to the Figs. 2 - 4.

It is to be understood that the present invention is not limited to the embodiments described above and illustrated in the drawings; rather, the skilled person will recognize that many changes and modifications may be made within the scope of the appended claims. For example, although the present invention has mainly been described in relation to a truck, the invention should be understood to be equally applicable for any type of vehicle and movable machine.

Although the figures may show a specific order of method steps, the order of the steps may differ from what is depicted. In addition, two or more steps may be performed concurrently or with partial concurrence. Such variation will depend on the software and hardware systems chosen and on designer choice. Likewise, software implementations could be accomplished with standard programming techniques with rule-based logic and other logic to accomplish the various connection steps, processing steps, comparison steps and decision steps. Additionally, even though the disclosure has been described with reference to specific exemplifying embodiments thereof, many different alterations, modifications and the like will become apparent for those skilled in the art.

The use of the terms "a" and "an" and "the" and similar referents in the context of describing the disclosed embodiments (especially in the context of the following claims) are to be construed to cover both the singular and the plural, unless otherwise indicated herein or clearly contradicted by context. The terms "comprising," "having," "including," and "containing" are to be construed as open-ended terms (i.e., meaning "including, but not limited to,") unless otherwise noted. The use of any and all examples, or exemplary language (e.g., "such as") provided herein, is intended merely to better illuminate embodiments of the disclosure and does not pose a limitation on the scope of the disclosure unless otherwise claimed. No language in the specification should be construed as indicating any non-claimed element as essential to the practice of the disclosure. Variations to the disclosed embodiments can be understood and effected by the skilled addressee in practicing the claimed disclosure, from a study of the drawings, the disclosure, and the appended claims.

## Claims

1. A method (100) of controlling an operation of a three-dimensional (3-D) printer (30) comprised with a vehicle, wherein the method comprises the steps of:
- receiving (110) an indication of any one of a current force and an expected force affecting the operation of the 3-D printer (30);
**characterized by**
- comparing (120) any one of the current force and the expected force affecting the operation of the 3-D printer (30) with a given force threshold; and
- adjusting (130) a printing rate of the 3-D printer (30) based on any one of the current force and the expected force affecting the operation of the 3-D printer (30), wherein, if any one of the current force and the expected force affecting the operation of the 3D-printer (30) is above the force threshold, the method further comprises the step of adjusting the printing rate of the 3-D printer (30) to a reduced printing rate.

2. Method according to claim 1, wherein the reduced printing rate corresponds to interrupting the operation of the 3-D printer.

3. Method according to any one of the preceding claims, wherein the force threshold comprises a threshold lower-level and a threshold upper-level, and wherein the step of adjusting the printing rate of the 3-D printer based on any one of the current force and the expected force affecting the operation of the 3-D printer comprises adjusting the printing rate of the 3-D printer to a first reduced printing rate if any one of the current force and the expected force affecting the operation of the 3-D printer exceeds the threshold lower-level, while interrupting the 3-D printer if any one of the current force and the expected force affecting the operation of the 3-D printer exceeds the threshold upper-level.

4. Method according to any one of the preceding claims, wherein the force threshold is associated with a quality level of the 3-D printer.

5. Method according to any one of the preceding claims, further comprising the step of determining (122) a desired quality level of the 3-D printing process, and adjusting the force threshold based on the determined desired quality level of the 3-D printing process.

6. Method according to claim 5, wherein the desired quality level of the 3-D printing process is selected by a user or from a 3-D printer manufacturing instruction.

7. Method according to any one of the preceding claims, further comprising the steps of determining a quality impact on the operation of the 3-D printer based on the indication of the current force or expected force affecting the operation of the 3-D printer and adjusting the printing rate of 3-D printer based on the determined quality impact of the 3-D print.

8. Method according to any one of the preceding claims, wherein the indication of the current force or expected force affecting the operation of the 3-D printer relates to any one of a vibration event, a change in direction of the vehicle and a change in velocity of the vehicle.

9. Method according to any one of the preceding claims, wherein the indication of any one of the current force and the expected force is determined by a sensor device configured to detect a force generating event within a detection capacity of the sensor device.

10. Method according to any one of the preceding claims, wherein the indication of the expected force is determined by any one of a road map data, gps, typographical data and Real Time Traffic Information (RTTI).

11. Method according to any one of the preceding claims, further comprising the steps of determining (124) a duration of the current force or expected force affecting the operation of the 3-D printer and adjusting the printing rate of the 3-D printer based on the determined duration of the current force or expected force affecting the operation of the 3-D printer.

12. Method according to claim 11, wherein the step of adjusting the printing rate of the 3-D printer is only activated if the determined duration of the current force or expected force affecting the operation of the 3-D printer exceeds a given time period.

13. Method according to any one of the preceding claims, in which the steps of the method are performed by a control unit (60), the control unit being arranged in communication with the 3-D printer, and a sensor device configured to detect the indication of any one of the current force and the expected force affecting the operation of the 3-D printer (30), wherein the 3-D printer (30), control unit (60) and sensor device (14, 16, 17, 18) are comprised in a three-dimensional (3-D) printer system (22).

14. A computer program comprising program code means for performing the method of any one of claims 1 - 13 when executed by a control unit (60), the control unit (60) being arranged in communication with the 3-D printer (30), and a sensor device (14, 16, 17, 18) configured to detect the indication of any one of the current force and the expected force affecting the operation of the 3-D printer (30), wherein the 3-D printer (30), control unit (60) and sensor device (14, 16, 17, 18) are comprised in a three-dimensional (3-D) printer system (22).

15. A computer readable medium carrying a computer program comprising program means for performing the method of any one of claims 1 - 13 when executed by a control unit (60), the control unit (60) being arranged in communication with the 3-D printer (30), and a sensor device (14, 16, 17, 18) configured to detect the indication of any one of the current force and the expected force affecting the operation of the 3-D printer (30), wherein the 3-D printer (30), control unit (60) and sensor device (14, 16, 17, 18) are comprised in a three-dimensional (3-D) printer system (22).

16. A vehicle (5) comprising a three-dimensional (3-D) printer system (22), the 3-D printer system (22) comprising a 3-D printer (30), a control unit (60) arranged in communication with the 3-D printer (30), and a sensor device (14, 16, 17, 18) configured to detect an indication of any one of a current force and an expected force affecting the operation of the 3-D printer (30), wherein the control unit (60) is arranged to:
- receive, from the sensor device (14, 16, 17, 18), an indication of any one of the current force and the expected force affecting the operation of the 3-D printer (30), further characterized to
- compare any one of the current force and the expected force affecting the operation of the 3-D printer (30) with a given force threshold; and
- adjust the printing rate of the 3-D printer (30) based on any one of the current force and the expected force affecting the operation of the 3-D printer (30), wherein, if any one of the current force and the expected force affecting the operation of the 3D-printer (30) is above the given force threshold, the control unit (60) is arranged to adjust the printing rate of the 3-D printer (30) to a reduced printing rate.

17. Vehicle according to claim 16, wherein the vehicle is a semi-truck vehicle comprising a trailer (20), and wherein the 3-D printer is arranged in the trailer to print parts on route to a user.

## Patentansprüche

1. Verfahren (100) zur Steuerung des Betriebs eines dreidimensionalen (3D) Druckers (30), der in einem Fahrzeug enthalten ist, wobei das Verfahren die folgenden Schritte umfasst:
- Empfangen (110) einer Anzeige einer aktuellen Kraft oder einer erwarteten Kraft, die den Betrieb des 3D-Druckers (30) beeinflusst; **gekennzeichnet durch**
- Vergleichen (120) der aktuellen Kraft oder der erwarteten Kraft, die den Betrieb des 3D-Druckers (30) beeinflusst, mit einer vorgegebenen Kraftschwelle; und
- Einstellen (130) einer Druckrate des 3D-Druckers (30) auf der Grundlage der aktuellen Kraft oder der erwarteten Kraft, die auf den Betrieb des 3D-Druckers (30) einwirkt, wobei, wenn die aktuelle Kraft oder die erwartete Kraft, die auf den Betrieb des 3D-Druckers (30) einwirkt, über der Kraftschwelle liegt, wobei das Verfahren ferner den Schritt des Einstellens der Druckrate des 3D-Druckers (30) auf eine reduzierte Druckrate umfasst.

2. Verfahren nach Anspruch 1, wobei die reduzierte Druckrate einer Unterbrechung des Betriebs des 3D-Druckers entspricht.

3. Verfahren nach einem der vorhergehenden Ansprüche, wobei die Kraftschwelle eine untere Schwelle und eine obere Schwelle umfasst, und wobei der Schritt des Einstellens der Druckrate des 3D-Druckers auf der Grundlage der aktuellen Kraft oder der erwarteten Kraft, die den Betrieb des 3D-Druckers beeinflusst, das Einstellen der Druckrate des 3D-Druckers auf eine erste reduzierte Druckrate umfasst, wenn die aktuelle Kraft oder die erwartete Kraft, die den Betrieb des 3D-Druckers beeinflusst, die untere Schwelle überschreitet, während der 3D-Drucker unterbrochen wird, wenn die aktuelle Kraft oder die erwartete Kraft, die den Betrieb des 3D-Druckers beeinflusst, die obere Schwelle überschreitet.

4. Verfahren nach einem der vorhergehenden Ansprüche, wobei die Kraftschwelle mit einem Qualitätsniveau des 3D-Druckers assoziiert ist.

5. Verfahren nach einem der vorhergehenden Ansprüche, ferner umfassend den Schritt des Bestimmens (122) eines gewünschten Qualitätsniveaus des 3D-Druckverfahrens und des Einstellens der Kraftschwelle auf der Grundlage des bestimmten gewünschten Qualitätsniveaus des 3D-Druckverfahrens.

6. Verfahren nach Anspruch 5, wobei das gewünschte Qualitätsniveau des 3D-Druckverfahrens von einem Benutzer oder aus einer Herstellungsanweisung für den 3D-Drucker ausgewählt wird.

7. Verfahren nach einem der vorhergehenden Ansprüche, das ferner die Schritte zum Bestimmen einer Qualitätsauswirkung auf den Betrieb des 3D-Druckers auf der Grundlage der Angabe der aktuellen Kraft oder der erwarteten Kraft, die den Betrieb des 3D-Druckers beeinflusst, und Einstellen der Druckrate des 3D-Druckers auf der Grundlage der bestimmten Qualitätsauswirkung des 3D-Drucks umfasst.

8. Verfahren nach einem der vorhergehenden Ansprüche, wobei sich die Anzeige der aktuellen Kraft oder der erwarteten Kraft, die den Betrieb des 3D-Druckers beeinflusst, auf ein Vibrationsereignis, eine Richtungsänderung des Fahrzeugs oder eine Geschwindigkeitsänderung des Fahrzeugs bezieht.

9. Verfahren nach einem der vorhergehenden Ansprüche, wobei die Anzeige der aktuellen Kraft oder der erwarteten Kraft durch eine Sensorvorrichtung bestimmt wird, die konfiguriert ist, um ein Krafterzeugungsereignis innerhalb einer Erfassungskapazität der Sensorvorrichtung zu erfassen.

10. Verfahren nach einem der vorhergehenden Ansprüche, wobei die Anzeige der zu erwartenden Kraft anhand von Straßenkartendaten, GPS-Daten, typografischen Daten und Echtzeit-Verkehrsinformationen (RTTI) bestimmt wird.

11. Verfahren nach einem der vorhergehenden Ansprüche, das ferner die Schritte zum Bestimmen (124) einer Dauer der aktuellen Kraft oder der erwarteten Kraft, die auf den Betrieb des 3D-Druckers einwirkt, und das Einstellen der Druckrate des 3D-Druckers auf der Grundlage der bestimmten Dauer der aktuellen Kraft oder der erwarteten Kraft, die auf den Betrieb des 3D-Druckers einwirkt, umfasst.

12. Verfahren nach Anspruch 11, wobei der Schritt des Einstellens der Druckrate des 3D-Druckers nur aktiviert wird, wenn die bestimmte Dauer der aktuellen Kraft oder der erwarteten Kraft, die auf den Betrieb des 3D-Druckers einwirkt, eine bestimmte Zeitspanne überschreitet.

13. Verfahren nach einem der vorhergehenden Ansprüche, bei dem die Schritte des Verfahrens von einer Steuereinheit (60) durchgeführt werden, wobei die Steuereinheit in Verbindung mit dem 3D-Drucker angeordnet ist, und eine Sensorvorrichtung, die konfiguriert ist, um die Anzeige der aktuellen Kraft oder der erwarteten Kraft, die den Betrieb des 3D-Druckers (30) beeinflusst, erfasst, wobei der 3D-Drucker (30), die Steuereinheit (60) und die Sensorvorrichtung (14, 16, 17, 18) in einem dreidimensionalen (3D) Druckersystem (22) enthalten sind.

14. Computerprogramm mit Programmcodemitteln zum Durchführen des Verfahrens nach einem der Ansprüche 1-13, wenn es von einer Steuereinheit (60) ausgeführt wird, wobei die Steuereinheit (60) in Verbindung mit dem 3D-Drucker (30) angeordnet ist, und eine Sensorvorrichtung (14, 16, 17, 18), die konfiguriert ist, um die Anzeige der aktuellen Kraft oder der erwarteten Kraft, die den Betrieb des 3D-Druckers (30) beeinflusst, zu erfassen, wobei der 3D-Drucker (30), die Steuereinheit (60) und die Sensorvorrichtung (14, 16, 17, 18) in einem dreidimensionalen (3D) Druckersystem (22) enthalten sind.

15. Computerlesbares Medium mit einem Computerprogramm, das Programmmittel zum Durchführen des Verfahrens nach einem der Ansprüche 1-13 umfasst, wenn es von einer Steuereinheit (60) ausgeführt wird, wobei die Steuereinheit (60) in Verbindung mit dem 3D-Drucker (30) angeordnet ist, und eine Sensorvorrichtung (14, 16, 17, 18), die konfiguriert ist, um die Anzeige der aktuellen Kraft oder der erwarteten Kraft, die den Betrieb des 3D-Druckers (30) beeinflusst, zu erfassen, wobei der 3D-Drucker (30), die Steuereinheit (60) und die Sensorvorrichtung (14, 16, 17, 18) in einem dreidimensionalen (3D) Druckersystem (22) enthalten sind.

16. Fahrzeug (5) mit einem dreidimensionalen (3D) Druckersystem (22), wobei das 3D-Druckersystem (22) einen 3D-Drucker (30), eine Steuereinheit (60), die in Verbindung mit dem 3D-Drucker (30) angeordnet ist, und eine Sensorvorrichtung (14, 16, 17, 18) umfasst, die konfiguriert ist, um eine Anzeige der aktuellen Kraft oder der erwarteten Kraft, die den Betrieb des 3D-Druckers (30) beeinflusst, zu erfassen,
wobei die Steuereinheit (60) angeordnet ist, zum:
- Empfangen einer Anzeige der aktuellen Kraft oder der erwarteten Kraft von der Sensorvorrichtung (14, 16, 17, 18), die den Betrieb des 3D-Druckers (30) beeinflusst, ferner **gekennzeichnet durch**
- Vergleichen der aktuellen Kraft oder der erwarteten Kraft, die den Betrieb des 3D-Druckers (30) beeinflusst, mit einer vorgegebenen Kraftschwelle; und
- Einstellen einer Druckrate des 3D-Druckers (30) auf der Grundlage der aktuellen Kraft oder der erwarteten Kraft, die auf den Betrieb des 3D-Druckers (30) einwirkt, wobei, wenn die aktuelle Kraft oder die erwartete Kraft, die auf den Betrieb des 3D-Druckers (30) einwirkt, über der Kraftschwelle liegt, wobei die Steuereinheit (60) angeordnet ist, die Druckrate des 3D-Druckers (30) auf eine reduzierte Druckrate einzustellen.

17. Fahrzeug nach Anspruch 16, wobei das Fahrzeug ein Sattelschlepper mit einem Anhänger (20) ist, und wobei der 3D-Drucker in dem Anhänger angeordnet ist, um Teile auf dem Weg zu einem Benutzer zu drucken.

## Revendications

1. Procédé (100) de commande d'un fonctionnement d'une imprimante tridimensionnelle (3D) (30) comprise dans un véhicule, ce procédé comprenant les étapes suivantes :
- réception (110) d'une indication de l'une quelconque parmi une force actuelle et une force attendue affectant le fonctionnement de l'imprimante 3D (30) ;
**caractérisé par**
- la comparaison (120) de l'une quelconque parmi la force actuelle et la force attendue affectant le fonctionnement de l'imprimante 3D (30) avec un seuil de force donné ; et
- le réglage (130) d'une vitesse d'impression de l'imprimante 3D (30) en se basant sur l'une quelconque parmi la force actuelle et la force attendue affectant le fonctionnement de l'imprimante 3D (30),
sachant que, si l'une quelconque parmi la force actuelle et la force attendue affectant le fonctionnement de l'imprimante 3D (30) est au-dessus du seuil de force, le procédé comprend en outre l'étape de réglage de la vitesse d'impression de l'imprimante 3D (30) à une vitesse d'impression réduite.

2. Procédé selon la revendication 1, dans lequel la vitesse d'impression réduite correspond à l'interruption du fonctionnement de l'imprimante 3D.

3. Procédé selon l'une quelconque des revendications précédentes, dans lequel le seuil de force comprend un niveau inférieur de seuil et un niveau supérieur de seuil, et l'étape de réglage de la vitesse d'impression de l'imprimante 3D en se basant sur l'une quelconque parmi la force actuelle et la force attendue affectant le fonctionnement de l'imprimante 3D comprend le réglage de la vitesse d'impression de l'imprimante 3D à une première vitesse d'impression réduite si l'une quelconque parmi la force actuelle et la force attendue affectant le fonctionnement de l'imprimante 3D excède le niveau inférieur de seuil tout en stoppant l'imprimante 3D si l'une quelconque parmi la force actuelle et la force attendue affectant le fonctionnement de l'imprimante 3D excède le niveau supérieur de seuil.

4. Procédé selon l'une quelconque des revendications précédentes, dans lequel le seuil de force est associé à un niveau de qualité de l'imprimante 3D.

5. Procédé selon l'une quelconque des revendications précédentes, comprenant en outre l'étape de détermination (122) d'un niveau de qualité souhaité du processus d'impression 3D, et le réglage du seuil de force en se basant sur le niveau de qualité souhaité déterminé du processus d'impression 3D.

6. Procédé selon la revendication 5, dans lequel le niveau de qualité souhaité du processus d'impression 3D est sélectionné par un utilisateur ou dans une instruction de fabrication d'une imprimante 3D.

7. Procédé selon l'une quelconque des revendications précédentes, comprenant en outre les étapes de détermination d'un impact de qualité sur le fonctionnement de l'imprimante 3D en se basant sur l'indication de la force actuelle ou de la force attendue affectant le fonctionnement de l'imprimante 3D et de réglage de la vitesse d'impression de l'imprimante 3D en se basant sur l'impact de qualité déterminé de l'impression 3D.

8. Procédé selon l'une quelconque des revendications précédentes, dans lequel l'indication de la force actuelle ou de la force attendue affectant le fonctionnement de l'imprimante 3D se rapporte à l'un quelconque parmi un événement de vibration, un changement de direction du véhicule et un changement de vitesse du véhicule.

9. Procédé selon l'une quelconque des revendications précédentes, dans lequel l'indication de l'une quelconque parmi la force actuelle et la force attendue est déterminée par un dispositif de détection configuré pour détecter un événement de génération de force dans le cadre d'une capacité de détection du dispositif de détection.

10. Procédé selon l'une quelconque des revendications précédentes, dans lequel indication de la force attendue est déterminée par l'une quelconque parmi des données de carte routière, de GPS, des données topographiques et des informations de circulation en temps réel (RTTI).

11. Procédé selon l'une quelconque des revendications précédentes, comprenant en outre les étapes de détermination (124) d'une durée de la force actuelle ou de la force attendue affectant le fonctionnement de l'imprimante 3D et de réglage de la vitesse d'impression de l'imprimante 3D en se basant sur la durée déterminée de la force actuelle ou de la force attendue affectant le fonctionnement de l'imprimante 3D.

12. Procédé selon la revendication 11, dans lequel l'étape de réglage de la vitesse d'impression de l'imprimante 3D n'est activée que si la durée déterminée de la force actuelle ou de la force attendue affectant le fonctionnement de l'imprimante 3D excède une période donnée.

13. Procédé selon l'une quelconque des revendications précédentes, dans lequel les étapes du procédé sont réalisées par une unité de commande (60), l'unité de commande étant disposée en communication avec l'imprimante 3D, et un dispositif de détection configuré pour détecter l'indication de l'une quelconque parmi la force actuelle et la force attendue affectant le fonctionnement de l'imprimante 3D (30), l'imprimante 3D (30), l'unité de commande (60) et le dispositif de détection (14, 16, 17, 18) étant compris dans un système d'imprimante tridimensionnelle (3D) (22).

14. Programme informatique comprenant un moyen de codage de programme pour réaliser le procédé selon l'une quelconque des revendications 1 à 13 lorsqu'il est exécuté par une unité de commande (60), l'unité de commande (60) étant disposée en communication avec l'imprimante 3D (30), et un dispositif de détection (14, 16, 17, 18) configuré pour détecter l'indication de l'une quelconque parmi la force actuelle et la force attendue affectant le fonctionnement de l'imprimante 3D (30), l'imprimante 3D (30), l'unité de commande (60) et le dispositif de détection (14, 16, 17, 18) étant compris dans un système d'imprimante tridimensionnelle (3D) (22).

15. Support lisible par ordinateur comportant un programme informatique comprenant un moyen de programmation pour réaliser le procédé selon l'une quelconque des revendications 1 à 13 lorsqu'il est exécuté par une unité de commande (60), l'unité de commande (60) étant disposée en communication avec l'imprimante 3D (30), et un dispositif de détection (14, 16, 17, 18) configuré pour détecter l'indication de l'une quelconque parmi la force actuelle et la force attendue affectant le fonctionnement de l'imprimante 3D (30), l'imprimante 3D (30), l'unité de commande (60) et le dispositif de détection (14, 16, 17, 18) étant compris dans un système d'imprimante tridimensionnelle (3D) (22).

16. Véhicule (5) comprenant un système d'imprimante tridimensionnelle (3D) (22), le système d'imprimante tridimensionnelle (3D) (22) comprenant une imprimante 3D (30), une unité de commande (60) disposée en communication avec l'imprimante 3D (30), et un dispositif de détection (14, 16, 17, 18) configuré pour détecter l'indication de l'une quelconque parmi une force actuelle et une force attendue affectant le fonctionnement de l'imprimante 3D (30), l'unité de commande (60) étant conçue pour :
- recevoir, de la part du dispositif de détection (14, 16, 17, 18), une indication de l'une quelconque parmi une force actuelle et une force attendue affectant le fonctionnement de l'imprimante 3D (30) ;
caractérisé en outre pour
- comparer l'une quelconque parmi la force actuelle et la force attendue affectant le fonctionnement de l'imprimante 3D (30) avec un seuil de force donné ; et
- régler la vitesse d'impression de l'imprimante 3D (30) en se basant sur l'une quelconque parmi la force actuelle et la force attendue affectant le fonctionnement de l'imprimante 3D (30),
sachant que, si l'une quelconque parmi la force actuelle et la force attendue affectant le fonctionnement de l'imprimante 3D (30) est au-dessus du seuil de force donné, l'unité de commande (60) est conçue pour régler la vitesse d'impression de l'imprimante 3D (30) à une vitesse d'impression réduite.

17. Véhicule selon la revendication 16, le véhicule étant un véhicule à semi-remorque comprenant une remorque (20), et l'imprimante 3D étant disposée dans la remorque pour imprimer des pièces sur le trajet vers un utilisateur.
